# FASCICULE DE BREVET EUROPEEN

(11) **EP 1 980 968 B1**
(45) Date de publication et mention de la délivrance du brevet: **27.03.2013**
(21) Numéro de dépôt: 08103508.1
(22) Date de dépôt: 11.04.2008
(51) Int. Cl.: G06F 21/00

(54) **Protection de l'exécution d'un programme**
Schutz der Ausführung eines Programms
Program execution protection

(30) Priorité: 12.04.2007 FR 0754405
(43) Date de publication de la demande: 15.10.2008
(73) Titulaire: STMICROELECTRONICS S.A., 92120 Montrouge (FR)
(72) Inventeur: Liardet, Pierre-Yvan, 13790, Peynier (FR); Teglia, Yannick, 13011, Marseille (FR)
(74) Mandataire: de Beaumont, Michel

(56) Documents cités:
- FR-A- 2 790 844
- US-A1- 2005 251 708
- US-A1- 2005 257 033

## Description

### Domaine de l'invention

La présente invention concerne de façon générale les circuits électroniques et, plus particulièrement, le contrôle de l'exécution d'un programme par un microprocesseur.

### Exposé de l'art antérieur

Dans la plupart des programmes ou algorithmes exécutés par un microprocesseur, on trouve des branchements conditionnels, c'est-à-dire des étapes au cours desquelles le programme sélectionne l'instruction suivante à exécuter parmi deux instructions différentes. Ces branchements (jumps) sont généralement décidés en fonction de l'état d'un bit drapeau ou de condition (flag). Selon l'état de ce bit drapeau, l'exécution du programme se poursuit par une instruction ou une autre. C'est à ce moment qu'intervient le branchement conditionnel vers une adresse différente du programme.

Un tel fonctionnement est satisfaisant dans de nombreuses applications. Toutefois, dans des programmes manipulant des quantités secrètes ou plus généralement mettant en oeuvre des algorithmes pour lesquels on ne souhaite pas qu'un utilisateur non autorisé soit capable de modifier le séquencement du programme, de tels branchements constituent des points particulièrement vulnérables.

En particulier, un type d'attaque répandu pour déduire de l'exécution d'un algorithme des quantités secrètes ou pour passer frauduleusement des tests, est connu sous le nom d'attaque par injection de faute et consiste à forcer le déroutement d'un programme en introduisant une perturbation (par exemple, sur l'alimentation du processeur) à des positions stratégiques de son exécution. De telles injections de faute permettent ensuite de découvrir les quantités secrètes manipulées. Par exemple et de façon simplifiée, si un branchement conditionnel vérifie l'exactitude d'une clé par rapport à une clé préenregistrée, le branchement conditionnel vers les instructions autorisées ne doit pas se produire si la bonne clé n'est pas introduite dans une variable correspondante du programme. En présentant une mauvaise clé et en provoquant des perturbations sur l'exécution du programme (injection de faute), un mauvais (illicite) branchement conditionnel ayant pour effet l'acceptation de la mauvaise clé va statistiquement se produire. Or, il suffit que le branchement soit autorisé une fois pour permettre à un pirate d'exploiter les traitements exécutés par l'algorithme et pirater ainsi le programme.

Une technique connue de protection d'un programme contre des injections de faute consiste à calculer des signatures de deux exécutions du même programme pour comparer ces signatures par rapport à une signature préenregistrée ou l'une par rapport à l'autre. Cela requiert deux exécutions du programme, donc soit deux cellules matérielles, soit deux fois plus de temps. De plus, le circuit intégré exécutant le programme doit disposer des fonctions permettant de calculer les signatures correspondantes.

La demande de brevet américain N° 2005/0257033 (04-RO-030, B6511) décrit une solution selon laquelle une adresse de branchement est calculée en fonction d'un résultat sur plusieurs bits indicateurs d'un respect d'une condition souhaitée, des instructions de blocage du programme étant placées aux adresses respectives où conduit le branchement dans le cas où la condition attendue n'est pas respectée. Le choix des adresses de branchement doit être effectué à la création du programme contenu en mémoire non volatile. Les zones contenant les instructions de blocage sont donc dédiées à un test particulier.

Le document FR-A-2 790 844 décrit un processus de surveillance du déroulement de l'exécution d'une suite d'instructions, consistant à analyser la séquence des instructions transmises vers un processeur destiné à exécuter le programme surveillé, et à vérifier le résultat de cette analyse par référence à des données enregistrées avec le programme.

### Résumé de l'invention

La présente invention vise à pallier tout ou partie des inconvénients des solutions connues de protection du séquencement d'exécution d'un programme.

Un objet vise une solution versatile, utilisable par différents programmes.

Un autre objet vise une solution peu coûteuse en espace de mémoire non volatile.

Pour atteindre tout ou partie de ces objets ainsi que d'autres, il est prévu un procédé de contrôle de l'exécution d'au moins un programme dans un circuit électronique, dans lequel :
au moins une zone de mémoire volatile du circuit est, préalablement à l'exécution du programme à contrôler, remplie avec des premières instructions conduisant à un traitement d'exception ;
le programme contient des instructions de remplacement de tout ou partie des premières instructions par des deuxièmes instructions valides parmi lesquelles une instruction de retour dans le programme; et
ladite zone est appelée pour exécution de tout ou partie des instructions qu'elle contient en fin d'exécution du programme d'instructions..

Selon un mode de mise en oeuvre, une dernière deuxième instruction de ladite zone est, en cas de déroulement normal du programme, l'instruction de retour dans celui-ci.

Selon un mode de mise en oeuvre, le remplacement d'une première instruction par une deuxième est effectué à différents points du programme appelant..

Selon un mode de mise en oeuvre, le remplacement des premières instructions par les deuxièmes est effectué juste avant l'appel de ladite zone.

Selon un mode de mise en oeuvre, chaque première instruction conduit à un blocage du circuit.

Selon un mode de mise en oeuvre, ladite zone de mémoire volatile est réinitialisée avec des premières instructions à chaque nouvelle exécution d'un programme dont on souhaite contrôler l'exécution.

Selon un mode de mise en oeuvre, les deuxièmes instructions conduisent à une exécution séquentielle et successive des instructions de ladite zone.

Selon un mode de mise en oeuvre, les deuxièmes instructions sont des sauts dans ladite zone jusqu'à l' instruction de retour dans le programme.

Il est également prévu un processeur intégré d'exécution d'un programme comportant au moins une mémoire non volatile de stockage d'un programme dont on souhaite contrôler l'exécution et au moins une mémoire volatile, dans lequel une zone de la mémoire volatile et une unité de traitement du processeur sont adaptés pour mettre en oeuvre le procédé ci-dessus.

### Brève description des dessins

Ces objets, caractéristiques et avantages, ainsi que d'autres seront exposés en détail dans la description suivante de modes de mise en oeuvre et de réalisation particuliers faite à titre non-limitatif en relation avec les figures jointes parmi lesquelles :
la figure 1 représente une carte à puce du type auquel s'applique à titre d'exemple la présente invention ;
la figure 2 représente de façon très schématique un récepteur de signaux radiodiffusés du type auquel s'applique à titre d'exemple la présente invention ;
la figure 3 est un schéma-blocs d'un exemple d'architecture de circuit électronique du type auquel s'applique à titre d'exemple la présente invention ;
la figure 4 illustre un mode de mise en oeuvre par des contenus respectifs de mémoire non volatile et volatile ; et
la figure 5 est un organigramme simplifié d'un mode de mise en oeuvre.

De mêmes éléments ont été désignés par de mêmes références aux différentes figures.

### Description détaillée

Par souci de clarté, seuls les étapes et éléments qui sont utiles à la compréhension de l'invention ont été représentés et seront décrits. En particulier, les fonctions principales des programmes dont l'exécution est protégée n'ont pas été détaillées, l'invention étant compatible avec tout programme usuel.

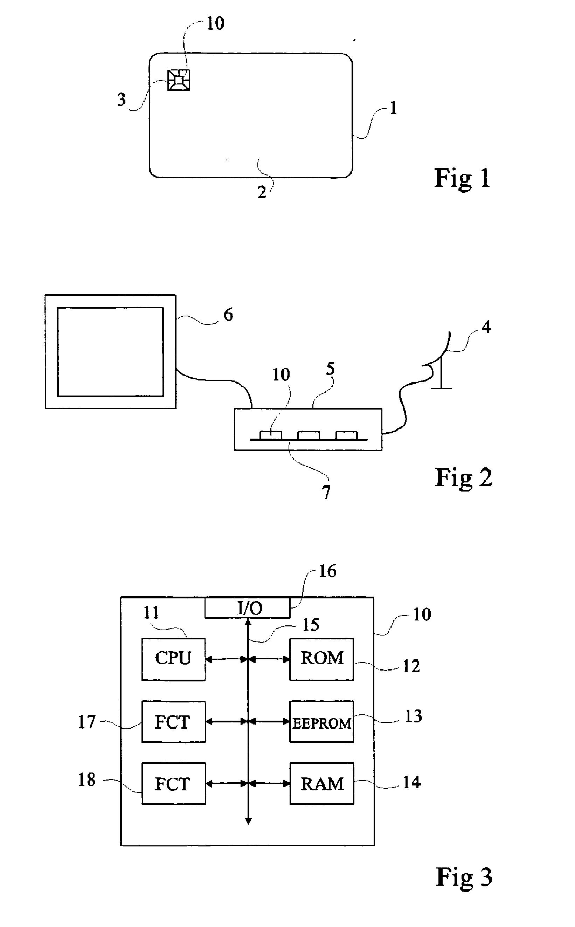

La figure 1 représente, de façon très schématique, une carte à puce 1 du type à laquelle s'applique à titre d'exemple la présente invention. Une telle carte est par exemple constituée d'un support 2 en matière plastique dans ou sur lequel est rapportée une puce 10 de circuit électronique susceptible de communiquer avec l'extérieur au moyen de contacts 3 ou au moyen d'éléments (non représentés) d'émission/réception sans contact. Le circuit 10 de la carte contient une unité de traitement capable d'exécuter des programmes stockés dans des mémoires également contenues dans le circuit 10 ou dans d'autres circuits portés par la carte.

La figure 2 représente un autre exemple d'application de la présente invention à des systèmes de télédiffusion à accès contrôlé. Dans cet exemple, une antenne 4 reçoit des signaux provenant d'un satellite (non représenté) qu'elle transmet à un décodeur 5 pour affichage sur un téléviseur 6. Le décodeur 5 comporte une ou plusieurs cartes électroniques 7 pourvues d'un ou plusieurs circuits 10 de traitement des données numériques reçues. Ce traitement consiste en un décodage au moyen d'une ou plusieurs quantités secrètes (clé cryptographique) que possède le décodeur 5. Ces clés sont contenues dans des mémoires associées au circuit électronique 10 ou sur un élément externe, par exemple, une carte à puce introduite dans le décodeur 5. Le décodeur 5 exécute là encore des programmes dont on peut souhaiter vérifier le séquencement.

La figure 3 est un schéma-blocs d'un mode de réalisation d'un circuit électronique 10. Ce circuit comporte une unité centrale de traitement 11 (CPU) capable d'exécuter des programmes contenus dans une ou plusieurs mémoires. Dans cet exemple, le circuit 10 comporte une mémoire non volatile non reprogrammable 12 (ROM), une mémoire non volatile reprogrammable 13 (EEPROM) et une mémoire vive 14 (RAM). Un ou plusieurs bus 15 de données, d'adresses et de commandes servent de support de communication entre les différents constituants du circuit 10 et avec une interface 16 (I/O) d'entrée/sortie pour communication avec ou sans contact avec l'extérieur. Le plus souvent, le circuit 10 comporte d'autres fonctions (blocs 17 et 18, FCT) dépendant de l'application. Il s'agit, par exemple, de cellules de calcul cryptographique dédiées pour mettre en oeuvre des algorithmes de chiffrement et de déchiffrement.

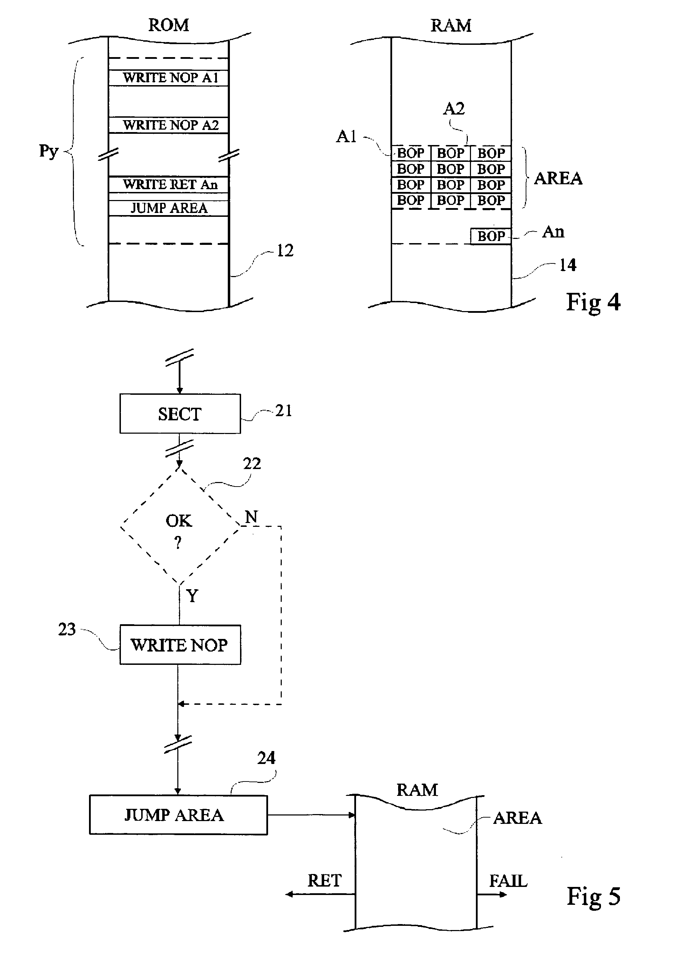

La figure 4 illustre un exemple de structure d'un programme Pg en mémoire 12 non volatile (par exemple non réinscriptible) ROM, et d'une zone de mémoire volatile 14 selon un mode de mise en oeuvre.

La figure 5 est un organigramme simplifié illustrant un mode de mise en oeuvre du procédé de contrôle de l'exécution du programme Pg.

Avant l'exécution d'un programme Pg dont l'exécution est surveillée par ce mode de mise en oeuvre, une zone AREA prédéfinie de la mémoire 14 (par exemple, ses dernières lignes) est remplie avec une succession de codes opératoires BOP (Bad OPcode) déclenchant chacun un comportement d'exception, par exemple, un blocage du circuit, un effacement de toutes les mémoires, etc.

Le remplissage de la zone AREA par les instructions BOP peut, selon l'application, être effectué à la mise en route du circuit électronique, avant l'exécution d'un programme dont on souhaite contrôler l'exécution, avant l'exécution d'une routine spécifique appelant des fonctions de sécurité, etc.

Le programme Pg est, lors de sa conception, prévu avec des instructions WRITE NOP d'écriture d'un code opératoire correct à des adresses A1, A2, etc. de la zone AREA. Ces instructions NOP remplacent donc, si le programme Pg est correctement exécuté, les mauvaises instructions BOP par des instructions correctes (Normal OPcode) ne conduisant pas à un traitement d'exception.

Les instructions WRITE NOP n'interfèrent pas avec le déroulement du programme Pg, en ce sens qu'il s'agit d'instructions ne modifiant pas le contenu des variables traitées par ce programme Pg.

Selon un exemple, des instructions WRITE NOP (bloc 23, figure 5) sont placées à différents points du programme Pg (par exemple, dans ou à la fin de sections 21 (SECT) considérées comme sensibles ou à passage obligatoire).

Selon un autre exemple illustré en pointillés en figure 5, une instruction WRITE NOP est, dans le programme Pg, précédée d'un test (bloc 22, OK ?) sur une phase d'exécution du programme Pg. Le test 22 est, par exemple, un test sur le résultat d'une autre fonction de détection d'une éventuelle perturbation (par exemple, un calcul de signature). En cas de non respect, l'instruction 23 est sautée.

Au moins une des instructions WRITE NOP écrit, dans la zone AREA (par exemple, à l'adresse An), une instruction de retour RET dans le programme Pg. L'instruction d'écriture WRITE RET est, par exemple, la dernière instruction de contrôle du programme appelant.

Le choix des codes opératoires (NOP) remplaçant les instructions BOP de traitement d'exception est effectué pour que, lors de l'appel du sous-programme de la zone AREA, on parvienne à l'instruction de retour RET si toutes les instructions BOP ont été remplacées.

Par exemple, il peut s'agir de sauts d'une adresse à une autre de la zone AREA jusqu'à atteindre l'adresse de l'instruction de retour. Selon un autre exemple, les instructions de la zone AREA sont remplacées successivement au cours du déroulement du programme Pg par des instructions (NEXT) de passage à l'instruction suivante jusqu'à une adresse contenant l'instruction retour RET. Plusieurs lignes du programme Pg peuvent le cas échéant conduire au remplacement d'une même instruction de la zone AREA si l'on considère que le passage par au moins une de ces lignes suffit à valider l'exécution correcte. De façon similaire, le passage par une ligne du programme Pg peut conduire au remplacement de plusieurs instructions de la zone AREA.

La complexité du sous-programme de la zone AREA (exécution séquentielle, sauts imbriqués, etc.) dépend de la conception du programme à surveiller. Ce sous-programme peut le cas échéant effectuer d'autres calculs cryptographiques.

A la fin du programme ou en fin d'exécution d'une zone sensible, ou lorsque l'on souhaite valider l'exécution du programme, celui-ci contient une instruction JUMP AREA de saut à une adresse de la zone AREA de la mémoire 14 (bloc 24). Ce saut conduit à l'exécution de tout ou partie des codes opératoires de la zone AREA (selon la routine représentée par ces codes lors de leur écriture) jusqu'à une instruction de retour RET dans le programme appelant Pg pour poursuivre son exécution.

En cas d'exécution incorrecte du programme principal, au moins l'un des codes opératoires d'exception BOP n'aura pas été remplacé et l'exécution du sous-programme de contrôle conduira donc à un traitement d'exception (FAIL).

Un avantage est que la même zone de mémoire vive peut servir aux différents contrôles d'exécution effectués sur différents programmes du circuit. La seule précaution est d'éviter que cette zone ne soit, en fonctionnement normal, écrasée lors de l'exécution de programme entre l'initialisation de la zone avec les codes opératoires d'exception et la fin du programme dont on souhaite contrôler l'exécution.

Un autre avantage est que la construction du sous-programme de vérification 24 en fin de programme est dynamique. Elle s'effectue au fur et à mesure de l'exécution du programme. Elle est donc difficilement piratable.

Un autre avantage est que la zone de la mémoire vive n'a pas besoin d'une structure prédéfinie. La fonction de contrôle peut donc organiser son chemin comme le souhaite le programmeur dans la zone AREA. Par exemple, différents programmes imbriqués peuvent se partager une même zone AREA pourvu qu'une exécution correcte de chacun conduise au remplacement correct des instructions BOP et à une instruction de retour RET. Selon un autre exemple, différentes parties de la zone AREA (donc différentes zones AREA) sont affectées à différents programmes à contrôler. Là encore, le choix revient au concepteur du programme principal qui choisit les adresses d'écriture des instructions NOP à sa guise.

Un autre avantage est que le programme principal ne construit pas d'adresse de saut, ce qui améliore la sécurité.

Un autre avantage est que l'utilisation d'une zone AREA en mémoire volatile apporte déjà une première protection de par sa nature. En effet, en cas de réinitialisation du circuit, toutes les instructions NOP sont perdues et, même si elles ne conduisent pas à un traitement d'exception, elles ne permettent pas de revenir dans le programme principal. Le cas échéant, on peut prévoir que l'unité de traitement interprète tout code faisant suite à une réinitialisation (par exemple, 0000) comme un traitement d'exception.

Un autre avantage est que, par défaut, toute la zone AREA contient des mauvais codes opératoires, donc un saut dans cette zone (par exemple, suite à un déroutement) avant modification de cette zone conduira forcément à un traitement d'exception.

Selon une variante de réalisation, la mise à jour des codes opératoires de la zone AREA n'est pas effectuée au fur et à mesure de l'exécution du programme à contrôler mais de façon groupée avant le saut 24 de contrôle d'exécution. Dans ce cas, des variables de mémoire volatile (registres ou autres zones mémoire) sont utilisées pour stocker les instructions NOP successives avant l'écriture dans la zone AREA de mémoire vive.

Des modes de réalisation particuliers ont été décrits. Diverses variantes et modifications apparaîtront à l'homme de l'art. En particulier, le choix des codes opératoires à inclure dans la zone de vérification de la mémoire vive dépend de l'application et, par exemple, du temps d'exécution que l'on souhaite donner à cette fonction de contrôle. De plus, bien que l'invention ait été décrite en relation avec un programme stocké en mémoire non volatile non réinscriptible (ROM), le programme dont on contrôle l'exécution peut également être stocké en mémoire non volatile réinscriptible (EEPROM).

## Revendications

1. Procédé de contrôle de l'exécution d'au moins un programme (Pg) dans un circuit électronique (10), **caractérisé en ce que** :
au moins une zone (AREA) de mémoire volatile (14) du circuit est, préalablement à l'exécution du programme à contrôler, remplie avec des premières instructions (BOP) conduisant à un traitement d'exception ;
le programme contient des instructions de remplacement de tout ou partie des premières instructions par des deuxièmes instructions (NOP) valides parmi lesquelles une instruction de retour (RET) dans le programme; et
ladite zone est appelée (JUMP AREA) pour exécution de tout ou partie des instructions qu'elle contient en fin d'exécution du programme.

2. Procédé selon la revendication 1, dans lequel une dernière deuxième instruction (NOP) de ladite zone est, en cas de déroulement normal du programme (Pg), l'instruction de retour (RET) dans celui-ci.

3. Procédé selon la revendication 1 ou 2, dans lequel le remplacement d'une première instruction (BOP) par une deuxième (NOP) est effectué à différents points du programme appelant (Pg).

4. Procédé selon la revendication 1 ou 2, dans lequel le remplacement des premières instructions (BOP) par les deuxièmes (NOP) est effectué juste avant l'appel de ladite zone (AREA).

5. Procédé selon l'une quelconque des revendications 1 à 4, dans lequel chaque première instruction (BOP) conduit à un blocage du circuit (10).

6. Procédé selon l'une quelconque des revendications 1 à 5, dans lequel ladite zone (AREA) de mémoire volatile est réinitialisée avec des premières instructions (BOP) à chaque nouvelle exécution d'un programme (Pg) dont on souhaite contrôler l'exécution.

7. Procédé selon l'une quelconque des revendications 1 à 6, dans lequel les deuxièmes instructions (NOP) conduisent à une exécution séquentielle et successive des instructions de ladite zone (AREA).

8. Procédé selon l'une quelconque des revendications 1 à 6, dans lequel les deuxièmes instructions (NOP) sont des sauts dans ladite zone jusqu'à l'instruction (RET) de retour dans le programme (Pg).

9. Processeur intégré d'exécution d'un programme comportant au moins une mémoire non volatile (12, 13) de stockage d'un programme (Pg) dont on souhaite contrôler l'exécution et au moins une mémoire volatile, dans lequel une zone (AREA) de la mémoire Volatile (14) et une unité centrale de traitement (11) du processeur sont adaptées pour mettre en oeuvre le procédé selon l'une quelconque des revendications 1 à 8.

## Claims

1. A method for controlling the execution of at least one program (Pg) in an electronic circuit (10), **characterized in that**:
at least one area (AREA) of volatile memory (14) of the circuit is, prior to the execution of the program to be controlled, filled with first instructions (BOP) resulting in an exception processing;
the program contains instructions for replacing all or part of the first instructions with second valid instructions (NOP) among which an instruction (RET) of return into the program; and
said area is called (JUMP AREA) for execution of all or part of the instructions that it contains at the end of the execution of the program.

2. The method of claim 1, wherein a last second instruction (NOP) of said area is, in case of a normal program (Pg) run, an instruction (RET) for returning into it.

3. The method of claim 1 or 2, wherein the replacing of a first instruction (BOP) with a second one (NOP) is performed at different points of the calling program (Pg).

4. The method of claim 1 or 2, wherein the replacing of the first instructions (BOP) with the second ones (NOP) is performed just before the call of said area (AREA).

5. The method of any of claims 1 to 4, wherein each first instruction (BOP) results in a locking of the circuit (10).

6. The method of any of claims 1 to 5, wherein said volatile memory area (AREA) is reset with first instructions (BOP) on each new execution of a program (Pg), the execution of which is desired to be controlled.

7. The method of any of claims 1 to 6, wherein the second instructions (NOP) result in a sequential successive execution of the instructions of said area (AREA).

8. The method of any of claims 1 to 6, wherein the second instructions (NOP) are jumps into said area to an instruction (RET) for returning into the program (Pg).

9. An integrated program execution processor comprising at least one non-volatile memory (12, 13) for storing a program (Pg), the execution of which is desired to be controlled, and at least one volatile memory, wherein an area (AREA) of the volatile memory (14) and a central processing unit (11) are adapted to implement the method of any of claims 1 to 8.

## Patentansprüche

1. Ein Verfahren zur Steuerung der Ausführung von mindestens einem Programm (Pg) in einer elektronischen Schaltung (10), **dadurch gekennzeichnet:**
**dass** mindestens ein Gebiet (AREA) des flüchtigen Speichers (14) der Schaltung vor der Ausführung des zu steuernden Programms mit ersten Befehlen (BOP) gefüllt wird, was eine Ausnahmeverarbeitung zur Folge hat;
das Programm Instruktionen oder Befehle enthält zum Ersetzen sämtlicher oder eines Teils der ersten Befehle mit zweiten gültigen Befehlen (NOP) unter denen sich ein Befehl (RET) zur Rückkehr in das Programm befindet; und
**dass** das Gebiet genannt (JUMP AREA) zur Ausführung von sämtlichen oder eines Teils der Befehle, die es enthält, und zwar am Ende der Ausführung des Programms.

2. Verfahren nach Anspruch 1, wobei ein letzter zweiter Befehl (NOP) des Gebiets im Falle eines normalen Programm-(Pg)-Ablaufs ein Befehl (RET) zur Rückkehr in dieses ist.

3. Verfahren nach Anspruch 1 oder 2, wobei das Ersetzen eines ersten Befehls (BOP) mit einem zweiten (NOP) an unterschiedlichen Punkten des Aufruf- oder Calling-Programms (Pg) ausgeführt wird.

4. Verfahren nach Anspruch 1 oder 2, wobei das Ersetzen der ersten Befehle (BOP) mit den zweiten (NOP) unmittelbar vor dem Aufrufen (Call) des erwähnten Gebiets (AREA) ausgeführt wird.

5. Verfahren nach einem der Ansprüche 1 bis 4, wobei jeder erste Befehl (BOP) eine Verriegelung der Schaltung (10) zur Folge hat.

6. Verfahren nach einem der Ansprüche 1 bis 5, wobei das erwähnte flüchtige Speichergebiet (AREA) zurückgesetzt wird, mit ersten Befehlen (BOP) bei jeder neuen Ausführung eines Programms (Pg), wobei gewünscht ist, dass die Ausführung dieses Programms gesteuert wird.

7. Verfahren nach einem der Ansprüche 1 bis 6, wobei die zweiten Befehle (NOP) eine sequentielle aufeinanderfolgende Ausführung der Befehle des erwähnten Gebiets (AREA) zur Folge haben.

8. Verfahren nach einem der Ansprüche 1 bis 6, wobei die zweiten Befehle (NOP) Sprünge in das erwähnte Gebiet sind, und zwar zu einem Befehl (RET) zur Rückkehr in das Programm (Pg).

9. Ein integrierter Programmausführungsprozessor, der mindestens einen nicht-flüchtigen Speicher (12, 13) aufweist, zum Speichern eines Programms (Pg) wobei gewünscht ist, dessen Ausführung zu steuern, und ferner mit mindestens einem flüchtigen Speicher, wobei ein Gebiet (AREA) des flüchtigen Speichers (14) und eine zentralen Prozessor- oder Verarbeitungseinheit (11) geeignet sind, das Verfahren, irgendeines der Ansprüche 1 bis 8 zu implementieren.
